# EUROPEAN PATENT APPLICATION

(11) **EP 0 540 749 A1**
(43) Date of publication of application: **12.05.1993**
(21) Application number: 92909666.7
(22) Date of filing: 30.04.1992
(51) Int. Cl.: G06F 15/70, G06F 15/68

(54) **METHOD AND APPARATUS FOR ADDITION IN PREPARATION OF HISTOGRAM IN AN IMAGE PROCESSOR**

(30) Priority: 10.05.1991 JP 135727/91
(71) Applicant: FANUC LTD., Minamitsuru-gun, Yamanashi 401-05 (JP)
(72) Inventor: HASHIMOTO, Yoshiki, Hadano-shi, Kanagawa 257 (JP); ENOMOTO, Minoru, Fanuc Dai-3 Vira-karamatsu, Minamitsuru-gun, Yamanashi 401-05 (JP)
(74) Representative: Billington, Lawrence Emlyn
(86) International application number: JP9200569
(87) International publication number: WO9221094

(57) **Abstract**

A method and an apparatus are provided for low-cost and high-speed operation of addition for preparing a histogram in an image processing. Pixel data output from a frame memory (5) are alternatingly stored in latches R2 and R3, and are used as addresses for a RAM (6) that stores calculated results. An address comparator (11) detects whether the pixel data are continuous and the same or not. When the data are the same, "2" is latched by the latch R1 and when the data are not the same, "1" is latched by the latch R1. A latch R4 reads the data from the RAM (6) that stores the calculated results, the value of latch R1 is added through an adder (12) to the value that is read out, and the resultant value is stored in the RAM (6) for storing the calculated result through a latch R5. The data are read out from the RAM (6) for storing the calculated results and are added, the added result for a preceding pixel data is written while the above data are being written onto the RAM (6) for storing the calculated result, and the data is read out from an address for a subsequent pixel data, in order to finish the addition of histogram for a pixel within one basic clock, thus shortening the processing time.

## Description

### Technical Field

The present invention relates to a histogram processing in an image processing system, and more particularly, to a histogram addition method for counting pixels of various brightnesses and an apparatus therefor.

### Background Art

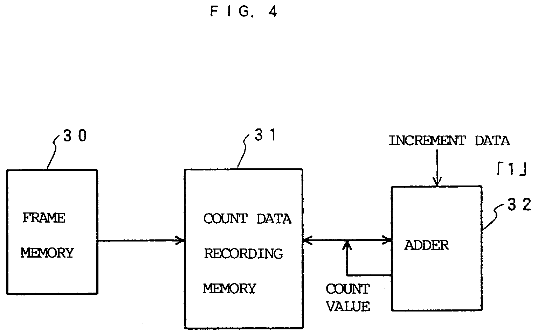

Histogram processing in an image processing system includes a process for counting pixels of specific brightnesses. Conventionally, this counting process is executed using the arrangement shown in Fig. 4. In Fig. 4, numerals 30, 31 and 32 respectively denote a frame memory for storing an image, a count data recording memory, and an adder. Various images of the frame memory 30 are scanned, and data on the individual pixels, that is, data indicative of the degrees of brightness stored by the pixels, are outputted as address values of the count data recording memory 31. If each pixel is composed of 8 bits, for example, 256-gradation data are obtained, and the count data recording memory 31 has 256 addresses. When each pixel data is inputted as an address to the count data recording memory 31, data stored in this address is read out; the adder 32 adds an increment value, e.g., "1" is added to the read value, and the result of the addition is written in a storage area of the address. By executing this process for the individual pixels in succession, the number of pixels for the same data (gradation) is totalized for each data (gradation) in the count data recording memory 31.

In the conventional histogram processing described above, the readout of the data from the count data recording memory 31, the addition of the increment value to the read data, and the writing of the addition result in the count data recording memory 31 are executed as one cycle for the processing of each pixel. Thus, the conventional histogram processing is disadvantageous in that each cycle takes time, and, consequently, the histogram processing also takes time accordingly. Thus, in order for the speed of this processing to be increased, a high-speed memory and a high-speed adder will become necessary, though this entails higher costs.

### Disclosure of the Invention

The object of the present invention is to provide a method and an apparatus for histogram addition, in which a data counting process for histogram processing can be effected at low cost and in a short time.

In order to achieve the above object, according to the present invention, successively read pixel data are compared with data for a directly preceding cycle by an address comparator. If the data are continuously identical, "2" is stored. In other cases, "1" is successively stored. Data are read out from addresses corresponding to various pixel data of a calculation result storage memory, and the stored value is added to the read value. The result of the addition is written in the aforesaid address of the calculation result storage memory. Then, for the time period between reading out said data and writing it, the addition result for the directly preceding pixel is written, and also data for the directly succeeding pixel are read out.

According to the present invention, moreover, there is provided a histogram addition apparatus for an image processing apparatus, comprising scanning/detecting means for scanning an image memory and successively reading out pixel data indicative of the respective brightnesses of various pixels with every basic cycle, an address comparator for temporarily storing the pixel data from the scanning/detecting means and judging whether or not currently detected pixel data are identical with pixel data detected in the directly preceding cycle in order to output "2" if the data are identical and "1" if the data are not identical, a calculation result storage memory for storing the number of pixels detected as being of the identical pixel data by the scanning operation of the scanning/detecting means in the address corresponding to the pixel data, an address switching means for alternately latching the output pixel data from the scanning/detecting means with a delay equivalent to half the basic cycle and outputting latch data during the basic cycle for latching the output pixel data in order to use the latch data as an address of the calculation result storage memory, an adder for adding the output from the read address comparator to the data read out from the calculation result storage memory to output the result of the addition, a means for reading out the data stored in the address of the calculation result storage memory, which have been addressed by the address switching means, with every basic cycle and delivering the data to the adder, and a means for writing the output of the adder to the calculation result storage memory with a delay equivalent to half the basic cycle.

Preferably, furthermore, a histogram addition apparatus for an image processing system according to the present invention comprises: a clock generator 13 for outputting a basic clock generated with every basic cycle, a second clock generated behind the basic clock with a delay equivalent to half the cycle, a third clock inverted with every basic clock, a fourth clock as an inverted version of the third clock, a fifth clock delayed behind the basic clock for half the cycle and generated with every two cycles of the basic clock, and a sixth clock generated behind the fifth clock C5 with a delay equivalent to one cycle of the basic clock; scanning/detecting means for successively scanning a memory for storing an image and successively reading out pixel data indicative of the respective brightnesses of various pixels, with every basic clock; an address comparator for storing the pixel data read out from the scanning/detecting means with every basic clock and judging whether or not the pixel data read out in response to the basic clock for the present cycle are identical with the stored pixel data inputted in response to the basic clock for the directly preceding cycle in order to output "2" if the data are identical and "1" if the data are not identical; first latch means for latching and delivering the output of the address comparator with every basic clock; address switching means composed of second latch means for latching the output pixel data from the scanning/detecting means in response to the fifth clock and delivering the data, as an address of the calculation result storage memory, to the address bus while the third clock is in one state for the latching, and third latch means for latching the output pixel data from the scanning/detecting means in response to the sixth clock and delivering the data, as an address of the calculation result storage memory, to the address bus while the fourth clock is in the one state for the latching; a calculation result storage memory connected to an address bus and a data bus and used to store the number of pixels with the identical pixel data in the address corresponding to the pixel data; fourth latch means for latching and outputting, in response to the basic clock, data stored in the address corresponding to the pixel data delivered from the calculation result storage memory to the data bus; an adder for adding the output from the first latch means to the output data of the fourth latch means, and outputting the result of the addition; and fifth latch means for latching the addition output from the adder in response to the basic clock and delivering the output to the data bus in response to the second clock.

According to the present invention, as described above, "2" is stored if the read pixel data are identical with the data of the directly preceding cycle, and "1" is stored successively if the data are different. Meanwhile, data for storing the frequency of production of data identical with the read pixel data are read out from the calculation result storage memory using the read data as the address; "1" or "2" stored as aforesaid is added; and the result of the addition is stored in that address.

Further, the data are read out from the calculation result storage memory; the result of addition for the directly preceding pixel data is written while the aforesaid addition result is being written; and data for the directly succeeding pixel data are read out. By repeating these processes, the number of data for the respective brightnesses of the pixels is stored in the calculation result storage memory. In this case, the data for the next pixel are read out before the addition result for the directly preceding pixel is written in the calculation result storage memory. Thus, when the pixel data are identical, data obtained after the addition result is written are read out. Although another addition is made subsequently, one addition is canceled, because the data are read out before the addition result is written. In the present invention, therefore, "2" is added when there are continuously identical pixel data, and the result of this addition is written in the calculation result storage memory.

According to the present invention, the address comparator is added to the apparatus for histogram processing, so that various brightnesses stored in the individual pixels of the image can be counted in a short time by controlling the timing for processing. Thus, high-speed histogram processing can be effected at low cost.

### Brief Description of the Drawings

Fig. 1 is a block diagram of a histogram processor for carrying out one embodiment of the present invention;
Fig. 2 is a timing chart according to the above embodiment;
Fig. 3 is a block diagram of an image processing system to which the above embodiment is applied; and
Fig. 4 is a block diagram illustrating a counting process for conventional histogram processing.

### Best Mode of Carrying Out the Invention

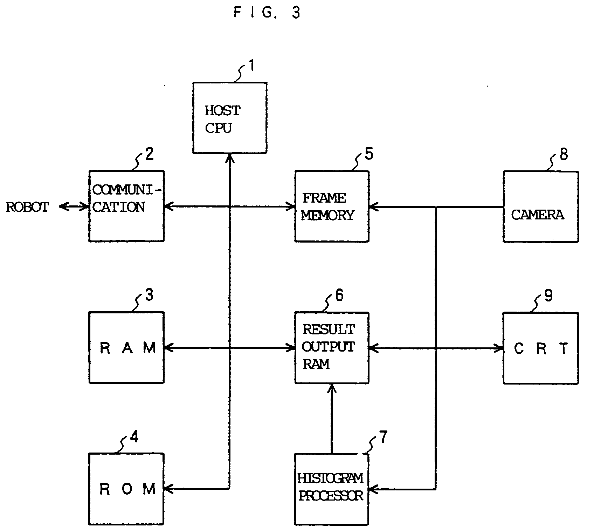

Fig. 3 is a block diagram showing one embodiment of an image processing system for carrying out the present invention. In Fig. 3, numeral 1 denotes a host processor, which controls the image processing system in accordance with programs stored in a ROM 4. Numeral 2 denotes a communication interface for communication, connected to a robot or the like which is fitted with the image processing system, and 3 denotes a RAM for storing various calculations executed by the processor 1 and various data. Numeral 5 denotes a frame memory for storing images photographed by a camera 8 for photographing an object of detection; 6, a calculation result storage RAM for storing the frequency of production of pixel data in histogram processing; and 7, a histogram processor for histogram processing. Further, numeral 9 denotes a CRT display unit.

The configuration of the image processing system described above is substantially the same as that of the conventional image processing system, except that the former differs from the latter only in the structure of the histogram processor 7.

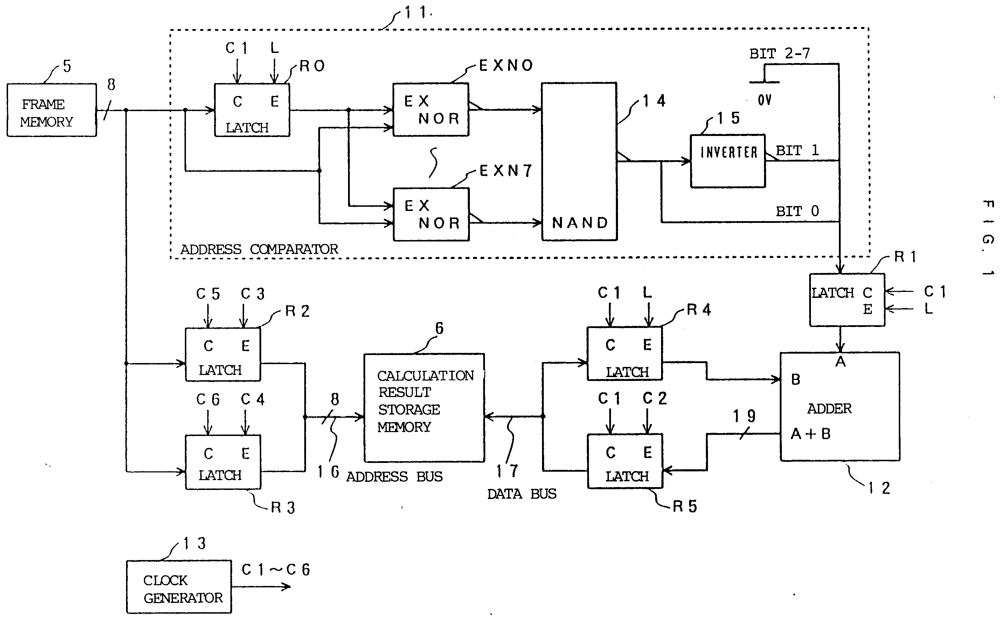

Fig. 1 is a block diagram showing a specific configuration of the histogram processor 7, comprising an address comparator 11, an adder 12, a clock generator 13, and latches R1 to R5. The address comparator 11 is composed of a latch R0, exclusive NORs EXN0 to EXN7, a NAND circuit 14, an inverter 15, etc. Further, numerals 5 and 6 respectively denote the frame memory and the calculation result storage RAM.

An image obtained by being photographed with the camera 8 is stored in the frame memory 5. Each pixel in the frame memory 5, according to the present embodiment, is composed of 8 bits, and the brightness of the image is stored in 256 gradations for each pixel. Data outputs for the individual pixels from the frame memory 5 are inputted to the latches R0, R2 and R3 and the exclusive NORs EXN0 to EXN7, and the respective outputs of the latches R2 and R3 are utilized as addresses of the calculation result storage RAM 6. The output of the individual bits (0 to 7) of the latch R0 are delivered to the exclusive NORs EXN0 to EXN7, respectively, and are compared with their corresponding bit outputs from the frame memory 5. The respective outputs of the exclusive NORs EXN0 to EXN7 are applied to the NAND circuit 14, whose output is delivered to the 0th bit of the latch R1, and is also delivered to the 1st bit through the inverter 15. The latch R4 latches the data delivered from the calculation result storage RAM 6, and delivers it to the adder 12. The adder 12 adds the data from the latches R1 and R4, and delivers the resulting data to the latch R5. The output of the latch R5 is loaded into the calculation result storage RAM 6.

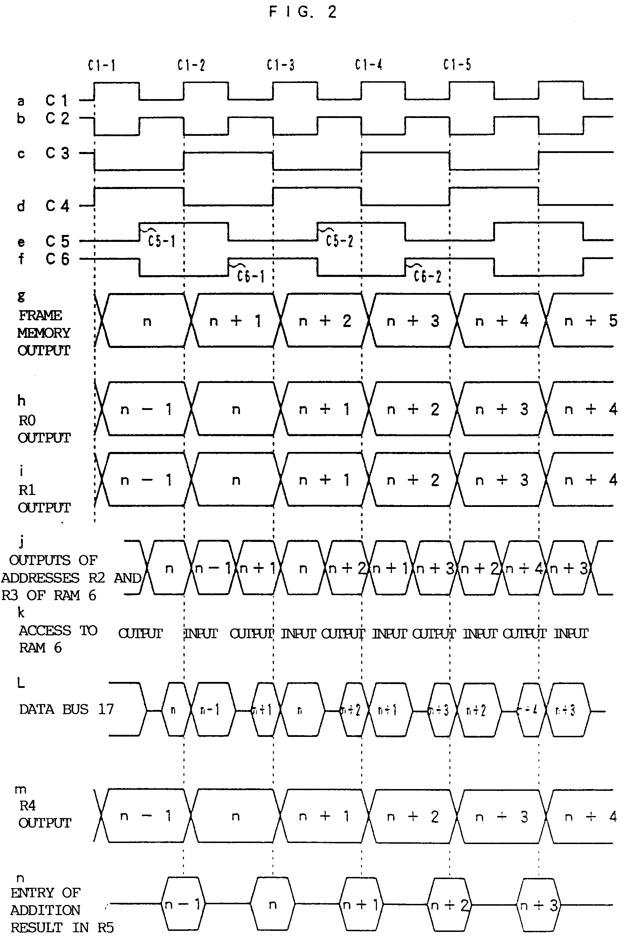

Referring now to the timing chart of Fig. 2, the operation of the histogram processor 7 will be described.

As shown in Figs. 2a to 2f, the clock generator 13 delivers a basic clock C1, a clock C2 as an inverted version of the basic clock C1, a clock C3 resulting from cyclic inversion of basic clock C1, a clock C4 as an inverted version of the clock C3, a clock C5 delayed from the clock C4 by half the cycle of the basic clock, and a clock C6 as an inverted version of the clock C5. The basic clock C1 is applied to the respective clock terminals C of the latches R0, R1, R4 and R5, whereas the clock C2 is applied to the output enable terminal E of the latch R5. Further, the clocks C3 and C4 are applied to the respective output enable terminals E of the latches R2 and R3, respectively, whereas the clocks C5 and C6 are applied to the respective clock terminals C of the latches R2 and R3, respectively. Low-level signals are always applied to the respective output enables terminals E of the latches R0, R1 and R4. The individual latches R0 to R5 latch the data inputted at the leading edge of each inputted clock, and deliver outputs while the low-level signals are being applied to each output enable terminal E.

The operation of the address comparator 11 will be described first.

The individual pixels from the frame memory 5 are successively scanned with every cycle of the basic clock C1, and the pixel data are outputted. Here let it be assumed that the data on an n'th pixel are outputted. The respective values of the 0th to 7th bits of data on an (n - 1)'th pixel latched in the latch R0 and their corresponding bits delivered from the frame memory are compared with one another by means of the exclusive NORs EXN0 to EXN7, and the exclusive NORs EXN0 to EXN7 deliver low-level (hereinafter referred to as L; H for high-level) signals, if each two inputted values are different. More specifically, the "H" signal is outputted if the input is "1, 1" or "0, 0", whereas the "L" signal is outputted if the input is "1, 0" or "0, 1". As a result, if the respective bit values of the pixel data (data on the pixel (n - 1)) before one basic clock stored in the latch R0 and the respective values of output (data on the pixel n) of the frame memory for the cycle concerned are equal, that is, if the data are identical, the "H" signal is delivered from each of the exclusive NORs EXN0 to EXN7, whereas the "L" signal is delivered from the NAND circuit 14, and "1" is stored into the 1st bit of the latch R1 through the inverter 15. Thus, the decimal "2" is stored in the latch R1. If the data on the pixel (n - 1) and the data on the pixel n are not identical, so that, if the "L" signal is delivered from at least one of the exclusive NORs EXN0 to EXN7, the "H" signal is delivered from the NAND circuit 14, and the decimal "1" is stored in the 0th bit of the latch R1.

Then, at the next leading edge of the basic clock C1, the data on the pixel n are stored in the latch R0; data on the next pixel (n + 1) are delivered from the frame memory 5; and the data on the pixels n and (n + 1) are compared. If these data are identical, "2" is stored in the latch R1, and "1" if not. Thereafter, the address comparator 11 repetitively executes the aforementioned processes in succession.

The following is a description of a data addition process.

Let it be assumed, as mentioned before, that the data on the pixel n are delivered from the frame memory 5, as shown in Fig. 2g. When the clock C5 rises (C5 - 1), these data are latched in the latch R2, and are delivered, as the address of the calculation result storage RAM 6, to an address bus 16 while the clock C3 is "L", as shown in Fig. 2j. As a result, data stored in the address corresponding to the data on the pixel n are delivered from the calculation result storage RAM 6 to a data bus 17, as shown in Fig. 21, and latched in the latch R4 at the next leading edge (C1 - 2) of the basic clock C1, and data of the address corresponding to the data on the pixel n are delivered from the latch R4, as shown in Fig. 2m.

Then, these data and the output data ("1" or "2") of the latch R1 are added by the adder 12, latched in the latch R5 at the next leading edge (C1 - 3) of the basic clock C1, as shown in Fig. 2n, and delivered to the data bus 17. Since there is no leading edge between the preceding leading edge (C5 - 1) of the clock C5 and the leading edge (C1 - 3) of the basic clock C1, the latch R2 is stored with the previously stored data on the pixel n. The address corresponding to these data is outputted when the clock C3 is "L", so that the output of the latch R5 is stored in the address corresponding to the data on the pixel n, as shown in Fig. 21.

More specifically, the data of the pixel n are used as the address of the calculation result storage RAM 6; "1" or "2" is added to the value stored in this address; and the resulting value is stored in this address. Thus, the numbers of pixels having identical output data are stored in each address of the calculation result storage RAM 6. The reason why "2" is added will be described later.

In this manner, the data of the pixel n are counted up and stored in the address of the calculation result storage RAM 6 which counts data identical with the data concerned. When the data of the next pixel (n + 1) are delivered from the frame memory 5 following the rise of clock C6 (C6 - 1) caused by the passage of one cycle of the basic clock C1, the data on the pixel (n + 1) are latched in the latch R3, and these data are outputted when the clock C4 is "L" as shown in Fig. 2j. Then, at the next leading edge (C1 - 3) of the basic clock C1, data are read out from the address of the calculation result storage RAM 6, which uses the data of the pixel (n + 1) as its address, and are latched in the latch R4. The latch R4 delivers the number of data identical with the data of the pixel (n + 1) to the adder 12, as shown in Fig. 2m. The adder 12 adds these data and "1" or "2" stored in the latch R1, and the resulting value is latched in the latch R5 at the next leading edge (C1 - 4) of the basic clock, and is outputted when the clock C2 is "L". In the meantime, the clock C4 is "L", and the latch R3 outputs the latched data of the pixel (n + 1), so that the result of the addition is added to the address represented by these data (see Fig. 2L).

As described above, the latches R2 and R3 alternately latch and output the data delivered from the frame memory 5 with every basic cycle. The latch R4 reads the output data of the calculation result storage RAM 6 at the leading edge of the basic clock C1, and delivers them to the adder, while the latch R5 latches the output of the adder 12 at the leading edge of the basic clock C1, delivers the latched output later when the clock C2 is "L", and stores the calculation result storage RAM 6 therewith. Thus, the address values addressed by the latches R2 and R3 are changed before and after the leading edge of the basic clock C1. In other words, new pixel data are used as the address immediately before the leading edge of the basic clock C1, whereas two-cycle-before pixel data are used as the address immediately after the leading edge.

As a result, for example, while reading out the data of pixel (n + 1) as an address from the calculation storage RAM 6 and then writing the result of addition in the address, the result of addition for the directly preceding pixel (n) is written in the calculation result storage RAM 6. If the adder 12 is designed to add "1" only, the pixels n and (n + 1) assign the same address when the data of the pixels n and (n + 1) are identical. Thus, after the result of addition of "1" to the address corresponding to the data of the pixel n is written in the calculation result storage RAM 6, the data must be read out from this address and added. Since the addition result, however, is written in after the data is read out from the same address as mentioned before, no addition is made if the pixel data are continuously identical. According to the present invention, therefore, if the address comparator 11 indicates that the pixel data are continuously identical, the latch R1 is stored with "2", and this value is added by the adder 12 to make up for the above-described deficiency of addition.

By executing the processing described above, the number of data identical with the pixel data for each basic clock cycle is added and stored in the calculation result storage RAM 6.

In short, the data are read out from the calculation result storage RAM 6 and added for each pixel data. While the data are written in the calculation result storage RAM 6, the result of addition for the directly preceding pixel data is written, and data are read out from the address directly following pixel data. By doing so, a histogram addition process for each pixel is made to be finished during the period of one basic clock, thereby reducing the time required for processing.

## Claims

1. A histogram addition method for counting pixels of various brightnesses in an image processing apparatus, comprising steps of storing "2" if successively read pixel data are continuously identical, successively storing "1" in other cases, reading out data from addresses corresponding to various pixel data of a calculation result storage memory, adding said stored value to the read value, writing the result of the addition in said address of the calculation result storage memory, and, for the time period between reading out said data and writing it, writing the addition result for the directly preceding pixel and also reading out data for the directly following pixel.

2. A histogram addition method for counting pixels of various brightnesses in an image processing apparatus which comprises a scanning/detecting means for scanning an image memory and successively reading out pixel data indicative of the respective brightnesses of various pixels with every basic cycle, an address comparator for temporarily storing the pixel data from said scanning/detecting means and judging whether or not the currently detected pixel data are identical with the pixel data detected in the directly preceding cycle in order to output "2" if the data are identical and "1" if the data are not identical, a calculation result storage memory for storing the number of pixels detected as being of the identical pixel data by the scanning operation of said scanning/detecting means in the address corresponding to said pixel data, an address switching means for alternately latching the output pixel data from said scanning/detecting means with a delay equivalent to half the basic cycle and outputting latch data during the basic cycle for latching said output pixel data in order to use the latch data as an address of said calculation result storage memory, an adder for adding the output from said read address comparator to the data read out from said calculation result storage memory to output the result of the addition, a means for reading out the data stored in said address of the calculation result storage memory addressed by said address switching means, with every said basic cycle and delivering the data to said adder, and a means for writing the output of said adder to said calculation result storage memory with a delay equivalent to half said basic cycle,
comprising: steps of storing "2" if successively read pixel data are continuously identical, successively storing "1" in other cases, reading out data from addresses corresponding to various pixel data of a calculation result storage memory, adding said stored value to the read value, writing the result of the addition in said address of the calculation result storage memory, and, for the time period between reading out said data and writing it, writing the addition result for the directly preceding pixel and also reading out data for the directly following pixel.

3. A histogram addition apparatus for an image processing system, comprising a scanning/detecting means for scanning an image memory and successively reading out pixel data indicative of the respective brightnesses of various pixels with every basic cycle, an address comparator for temporarily storing the pixel data from said scanning/detecting means and judging whether or not the currently detected pixel data are identical with the pixel data detected in the directly preceding cycle in order to output "2" if the data are identical and "1" if the data are not identical, a calculation result storage memory for storing the number of pixels detected as being of the identical pixel data by the scanning operation of said scanning/detecting means in the address corresponding to said pixel data, an address switching means for alternately latching the output pixel data from said scanning/detecting means with a delay equivalent to half the basic cycle and outputting latch data during the basic cycle for latching said output pixel data in order to use the latch data as an address of said calculation result storage memory, an adder for adding the output from said read address comparator to the data read out from said calculation result storage memory to output the result of the addition, a means for reading out the data stored in said address of the calculation result storage memory, which have been addressed by said address switching means, with every said basic cycle and delivering the data to said adder, and a means for writing the output of said adder to said calculation result storage memory with a delay equivalent to half said basic cycle.

4. A histogram addition apparatus for an image processing system, comprising:
a clock generator 13 for outputting a basic clock C1 generated with every basic cycle, a second clock C2 generated behind the basic clock C1 with a delay equivalent to half the cycle, a third clock C3 inverted with every said basic clock, a fourth clock C4 as an inverted version of said third clock C3, a fifth clock C5 delayed behind the basic clock for half the cycle and generated with every two cycles of the basic clock, and a sixth clock C6 generated behind said fifth clock C5 with a delay equivalent to one cycle of the basic clock;
scanning/detecting means for successively scanning a memory 5 for storing an image and successively reading out pixel data indicative of the respective brightnesses of various pixels, with every said basic clock C1;
an address comparator 11 for storing the pixel data read out from said scanning/detecting means with every basic clock C1 and determining whether or not the pixel data read out in response to the basic clock C1 for the present cycle are identical with said stored pixel data inputted in response to the basic clock C1 for the directly preceding cycle, in order to output "2" if the data are identical and "1" if the data are not identical;
first latch means R1 for latching and delivering the output of said address comparator 11 with every said basic clock C1;
address switching means composed of second latch means R2 for latching the output pixel data from said scanning/detecting means in response to said fifth clock C5 and delivering the data, as an address of said calculation result storage memory 6, to the address bus 16 while said third clock C3 is in one state for said latching, and third latch means R3 for latching the output pixel data from said scanning/detecting means in response to said sixth clock C6 and delivering the data, as an address of said calculation result storage memory 6, to the address bus 16 while said fourth clock C4 is in the one state for said latching;
a calculation result storage memory 6 connected to an address bus 16 and a data bus 17 and used to store the number of pixels with the identical pixel data in the address corresponding to said pixel data;
fourth latch means R4 for latching and outputting, in response to said basic clock C1, data stored in the address corresponding to the pixel data delivered from said calculation result storage memory 6 to the data bus 17;
an adder for adding the output from said first latch means to the output data of said fourth latch means R4, and outputting the result of the addition; and
fifth latch means for latching the addition output from said adder 12 in response to the basic clock C1, and delivering the output to said data bus 17 in response to the second clock C2.

5. A histogram addition apparatus for an image processing system according to claim 3, comprising said address comparator 11, which includes latch means for latching and outputting the data read out by said scanning/detecting means, an exclusive NORs for individually receiving corresponding bits of the respective outputs of said latch means and said scanning/detecting means, a NAND circuit for receiving the respective outputs of the exclusive NORs, and an inverter for inverting the output of said NAND circuit, the respective outputs of said NAND circuit and said inverter are delivered to the 0th and 1st bits of said first latch circuit respectively.
